# EUROPEAN PATENT SPECIFICATION

(11) **EP 3 553 589 B1**
(45) Date of publication and mention of the grant of the patent: **04.11.2026**
(21) Application number: 17879450.9
(22) Date of filing: 05.12.2017
(51) Int. Cl.: G02B 30/35, G02B 5/124, G02B 5/128

(54) **SYSTEM FOR USE IN IMAGING IN AIR**
SYSTEM ZUR VERWENDUNG BEI DER BILDGEBUNG IN DER LUFT
SYSTÈME DESTINÉ À ÊTRE UTILISÉ EN IMAGERIE DANS L'AIR

(30) Priority: 08.12.2016 CN 201611124003
(43) Date of publication of application: 16.10.2019
(73) Proprietor: Futurus Technology Co., Ltd., Beijing 100176 (CN)
(72) Inventor: XU, Junfeng, Beijing 100176 (CN)
(74) Representative: FDST Patentanwälte
(86) International application number: PCT/CN2017/114657
(87) International publication number: WO 2018/103643

(56) References cited:
- EP-A1- 1 785 752
- EP-A1- 2 180 365
- WO-A1-95/31739
- CN-A- 101 315 465
- CN-A- 102 789 121
- CN-A- 103 901 706
- CN-U- 203 217 230
- JP-A- 2014 186 916
- US-A1- 2004 169 928
- US-A1- 2009 073 552
- US-A1- 2010 177 402
- US-A1- 2014 055 858

## Description

### TECHNICAL FIELD

The present invention relates to the field of holographic imaging, and in particularly to a system for imaging in the air.

### BACKGROUND

Holography is a technology of recording and reproducing a real three-dimensional image of an object by means of interference and diffraction principles.

An existing holographic imaging method produces holographic images using the principle of laser interference. Light emitted by a laser source is split into two light beams, one of the two light beams directly irradiates (propagates) towards a photosensitive film and the other of the two light beams is reflected by an object to be photographed and then irradiates (propagates) towards the photosensitive film. The two light beams are superimposed with each other on the photosensitive film to generate an interference pattern. Finally, a reproduced hologram is further processed according to basic principles of digital images to remove noise digitally, thereby obtaining a sharp holographic image. This method has the disadvantages of relatively high requirement on monochromaticity (of the laser source) and relatively large difficulty in realizing color imaging.

Existing holographic imaging technologies are generally classified into the following three types.

The first type adopts virtual reality or augmented reality glasses or helmet, such as Microsoft's HoloLens, etc.. This type of technology has limited application scenarios and causes high costs currently, because of adopting of auxiliary instruments.

The second type, adopting a reflector with high rotation speed and a projector with high refreshing speed, projects an image on the reflector with high rotation speed so as to realize a three-dimensional image. The patent document CN105372926A discloses a rotary-holographic-projection display cabinet utilizing such technology. This technology is difficult to achieve interaction, and has a harsh requirement on the space for implementing this technology.

The third type, adopting medium containing fine particles, such as air including water vapor, projects an image on small water droplets formed by liquefaction of the water vapor. Because of disparity in molecular vibrations, an image with a district image gradations and strong stereoscopic effect can be formed. The patent documents CN104977794A and CN103116422A disclose application of such technology, both of the patent documents use a water vapor curtain wall to form an image in the air. Application of such technology also involves a need to adopt auxiliary tools to produce a water vapor curtain wall. Thus, it is not quite convenient to use the third type of technology.

In general, the above technologies, which realize imaging based on virtual reality or augmented reality tools, based on a reflector with a high rotation speed, or based on vapor particles in the air, are not really realize imaging based on air. US20100177402A1 describes a real mirror image forming optical system including a retroreflector with a corner cube. US20140055858A1 describes a cube corner retroreflective sheeting including an array of retroreflective cube corners. US20040169928A1 describes an elongate optical structure including microstructures and a substrate. EP2180365A1 describes a multi-viewpoint floating image display optical system including optical film and a retroreflector array. JP2014186916A describes a light emitting module and light source device including a light emitting body and a reflective layer, at least one of the reflection face and the light emitting body is provided with a retroreflection structure.

### SUMMARY

The present invention, which aims to overcome the deficiencies of the technologies described above, provides a true system and method of imaging in the air, enabling imaging directly in the air without any special medium, or even imaging in vacuum. This greatly broadens the range of applications, is no longer restricted by auxiliary tools, and brings a revolutionary breakthrough to an existing human-computer interaction scenario.

The object is achieved by the features of the respective independent claims. Further embodiments are defined in the corresponding dependent claims.

The embodiments of the present invention innovatively utilize e.g., a retroreflective film and a transflective mirror in combination to transform a virtual image into a real image, thereby realizing imaging in the air. Advantages of the embodiments of the present invention are: images can be presented directly in air, even in vacuum, without the aid of any medium (e.g., screen, gas or liquid containing fine particles, etc.); several persons can view the images at the same time, without the aid of other auxiliary equipment such as helmets, glasses, etc.; and in addition, the images are floating in the air, and can be touched directly by hands, thus making it possible to extend a lot of interactive applications.

### BRIEF DESCRIPTION OF THE DRAWINGS

In order to clearly illustrate the technical solution of embodiments of the invention or existing technologies, the drawings used in the description of the embodiments or existing technologies will be briefly described in the following; it is obvious that the described drawings are only related to some embodiments of the invention and thus the described drawings are only exemplary and not limitative of the invention.
Figure 1 schematically illustrates an imaging system according to an embodiment of the present invention;
Figure 2 schematically illustrates an imaging system according to another embodiment of the present invention;
Figure 3 schematically illustrates a retroreflective element;
Figure 4 schematically illustrates a microstructure of a retroreflective element and a retroreflective path of the retroreflective element;
Figure 5 schematically illustrates a retroreflective element;
Figures 6A and 6C are comparative examples and Figure 6B schematically illustrates a microstructure of a retroreflective element and a retroreflective path of the retroreflective element, according to another embodiment of the present invention;
Figure 7 schematically illustrates a retroreflective element according to yet another example;
Figure 8 schematically illustrates a microstructure of a retroreflective element and a retroreflective path of the retroreflective element, according example; and
Figure 9 schematically illustrates a top view of a distribution of microstructures of a retroreflective element according to an embodiment of the present invention.
The embodiments corresponding to figure 6B form part of the present invention. The other figures represent embodiments not forming part of the present invention but useful to understand it.

### DETAILED DESCRIPTION

In order to make objects, technical solutions and advantages of the present invention apparent, the present invention will be further described in detail with reference to the accompanying drawings.

For purposes of descriptive brevity and intuition, in the following, the solutions of the present invention will be described through describing a plurality of representative embodiments. Numerous details in the embodiments are provided solely to aid in understanding the solutions of the present invention. However, it is quite apparent that the technical solutions of the present invention, when in implementation, are not limited to adopt these details. In order to avoid unnecessarily obscuring the solutions of the present invention, some embodiments will not be described in detail, but only a framework is presented. In the following invention, "comprise (include)" means "include, but is not limited to", and "according to (in accordance with)•••" means "at least according to (in accordance with)•••, but is not limited to only according to•••". The terms "first", "second" and the like are only references for features, and are not intended to construe any limitation on the features, such as a limitation on sequence. Because of language conventions of the Chinese language, when the following invention does not particularly define the number of a component, it is meant that the component can be one or more in number, or can be understood as at least one.

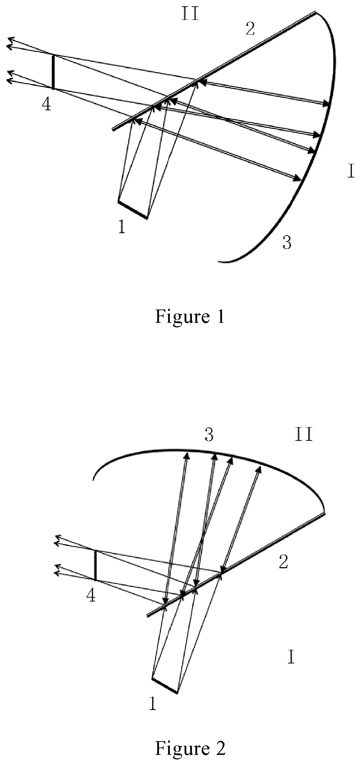

Figure 1 illustrates an imaging system according to an embodiment of the present invention. As illustrated in Figure 1, the system comprises an image source 1, a transflector 2 and a retroreflective element 3. The plane at which the transflector 2 is located divides a space into a first semi-region I and a second semi-region II; and both the image source 1 and the retroreflective element 3 are in the first semi-region I.

Light rays emitted by the image source 1 are reflected by the transflector 2 to irradiate on the retroreflective element 3. The light rays are subjected to retroreflection on the retroreflective element 3 so that light rays reflected by the retroreflective element 3 and light rays that is incident on the retroreflective element 3 propagate along the same path and only have opposite propagation directions. Thus, after being reflected by the retroreflective element 3, the light rays are propagated (emitted) along an original incident path (it should be understood, from a microscopic view, it can be considered that the reflective path and the incident path are slightly offset from each other; however, from a macroscopic view, it can be considered that the two paths are totally coincident), and the light rays are then transmitted through the transflector, to form a real image 4 in the second semi-region II.

The image source 1 may be an image displaying device, and may also be a virtual image or a real image formed by the image displaying device.

For example, the image displaying device may be a liquid crystal screen, and the backlight light source of the liquid crystal screen includes one or more of a laser, a light emitting diode, an organic light emitting diode, a stimulated fluorescent light emitting material, and an excitation light source based quantum dot. The image displaying device may also be an active -matrix screen which is formed by light sources based on light-emitting points such as LED, OLED, and plasma light emitting point. The image displaying device may also be a projection imaging system that is based on projection techniques such as DLP, LCOS and LCD, is driven by light sources such as LED, OLED, laser and fluorescence, or a combination thereof, realizes imaging through allowing light originated from light sources such as LED, OLED, laser and fluorescence, or a combination thereof to be reflected by or transmitted through display panels such as DMD, LCOS and LCD, and then to be projected on a projection screen via projection lens. The image displaying device may also be a projection imaging system based on laser scanning imaging on the screen. In addition, in all the image displaying devices as described above, a real image or virtual image formed by one or more refractions or reflections may also be used as an image source.

In preferred embodiments, the image source 1 may be a stereoscopic image source. The stereoscopic image source includes a three-dimensional stereoscopic display device which can display 3D stereoscopic images, structures, and video sources. The three-dimensional stereoscopic display device generally comprises a control module and a high-speed projection module or a high-speed display module. The control module is configured to control the projection module or the display module to project or display, with high speed, a series of 2D image slices at a plurality of optical planes, such that an observer observes a three-dimensional stereoscopic image, structure, or video. The three-dimensional stereoscopic display device includes a translational scan imaging system, a rotational scan imaging system, or the like.

The transflector may be made of a suitable transparent material, such as PC resin, PET resin, PMMA resin, glass, quartz, or the like. The transmittance of the transflector is ranges from 20% to 80%, preferably, is about 50%. The reflectivity of the transflector is also ranges from 20% to 80%, preferably, is also about 50%.

The retroreflective element 3 is preferably a thin film, a curtain or a plate distributed with a microstructure (or microstructures), and the retroreflective element 3 preferably has a curvature bent towards the transflector, thereby making it possible to increase the brightness of the displayed image. The following invention will describe the retroreflective element 3 in detail.

Referring to Figure 2, in another embodiment of the present invention, the system comprises an image source 1, a transflector 2 and a retroreflective element 3. The plane at which the transflector 2 is located divides a space into a first semi-region I and a second semi-region II. The image source 1 is located at the first semi-region I, whereas the retroreflective element 3 is located at the second semi-region II.

Light rays emitted by the image source 1 are transmitted through the transflector 2 to irradiate on the retroreflective element 3. The light rays are subjected to retroreflection on the retroreflective element 3 so that light rays reflected by the retroreflective element 3 and light rays that is incident on the retroreflective element 3 propagate along the same path and only have opposite propagation directions. Thus, after being reflected by the retroreflective element 3, the light rays are propagated (emitted) along an original incident path, and the light rays are then reflected by the transflector, to form a real image 4 in the second semi-region II.

It is to be understood that, because of wave-particle duality of light, there is a certain diffraction effect when the light rays are reflected by the retroreflective element 3, and a certain divergence angle of the reflected light is generated. When taking this into account, as long as the light along the main axis of the reflected light and the incident light are opposite in propagation directions, the meaning of "retroreflection" according to the present invention is also satisfied.

In the present embodiment, the light rays emitted by the image source 1 are transmitted through (not reflected by) the reflector mirror 2, before reaching the retroreflective element 3. The light rays reflected by the retroreflective element 3 are reflected by (not transmitted through) the transflector 2, to generate the real image 4. The real image 4 finally generated and the retroreflective element 3 are located at the same semi-region, rather than at different semi-regions.

In further another embodiment of the present invention (not illustrated), the two embodiments as described above are combined in a way of employing two retroreflective elements, such that the light rays emitted by the image source are reflected by the transflector to be incident onto one retroreflective element; and then the light rays reflected by the one retroreflective element are transmitted through the transflector to generate a real image. The light rays emitted by the image source are transmitted through the transflector to reach the other retroreflective element, and then the light rays reflected by the other retroreflection element are reflected by the transflector, to generate a real image. By this way, the two generated images overlap, thereby obtaining an image with greater brightness.

Of course, it should be understood that, in other embodiments, additionally or alternatively, two image sources may be used. In this case, the positions of the two image sources, and the transflector and the retroreflective elements may be adjusted, so that the real images finally generated overlap in space.

The retroreflective element of the present invention is a specially treated element including a substrate that is, for example, coated with a high reflective coating, and retroreflective microstructures that are, for example, uniformly distributed on the substrate. The high reflective coating has a reflectivity of 60% or more, preferably more than 70%, more than 80%, or more than 90%. It should be understood that the high reflective coating may also be formed on (attached to) the substrate through other manners, such as, for example, through coating film.

Of course, the high reflective coating may, for example, be attached to the surface, that faces the substrate, of the microstructure, or attached to the interface between the microstructure and the substrate.

It is to be understood that the distribution of the retroreflective microstructures on the substrate may also be non-uniform, and uniformly distribution can achieve a better imaging effect. However, some deliberately arranged non-uniform distribution may be used for particular imaging purposes.

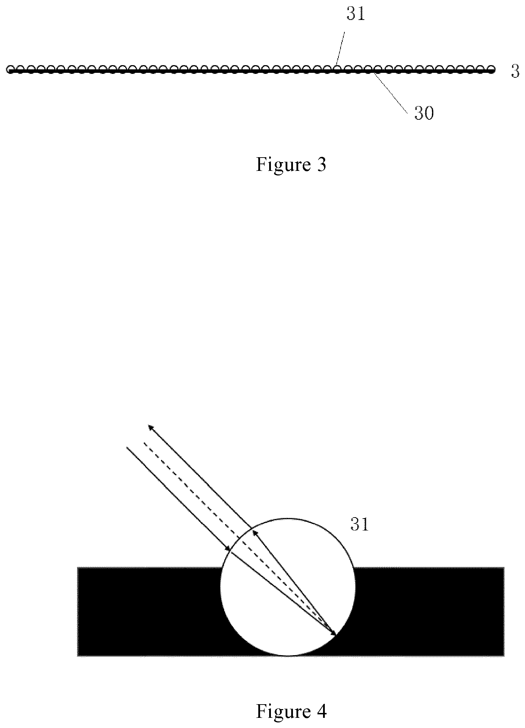

Referring to Figure 3, a retroreflective element according to comparative example is illustrated. The retroreflective element 3 includes a film or a curtain that serves as a substrate 30. The substrate 30 is coated with a high reflective coating. In addition, spherical microstructures 31 are uniformly distributed on the substrate 30.

Referring to Figure 4, an enlarged view of a spherical microstructure and a schematic diagram of a retroreflective path of the spherical microstructure are illustrated.

Light rays originated from the transflector are refracted at the upper surface of a spherical microstructure 31 to irradiate on the high reflective coating of the substrate 30. After being reflected by the high reflective coating, the light rays irradiate onto the upper surface of the spherical microstructure 31 again and are refracted at the upper surface of the spherical microstructure 31 again to irradiate on (propagates towards) the transflector. The structure of the spherical microstructure 31 allows the light rays to be capable of returning to the transflector almost via the original path (as previously described, it can be considered that the light rays, when viewed in a macroscopic environment, are returned along the original path).

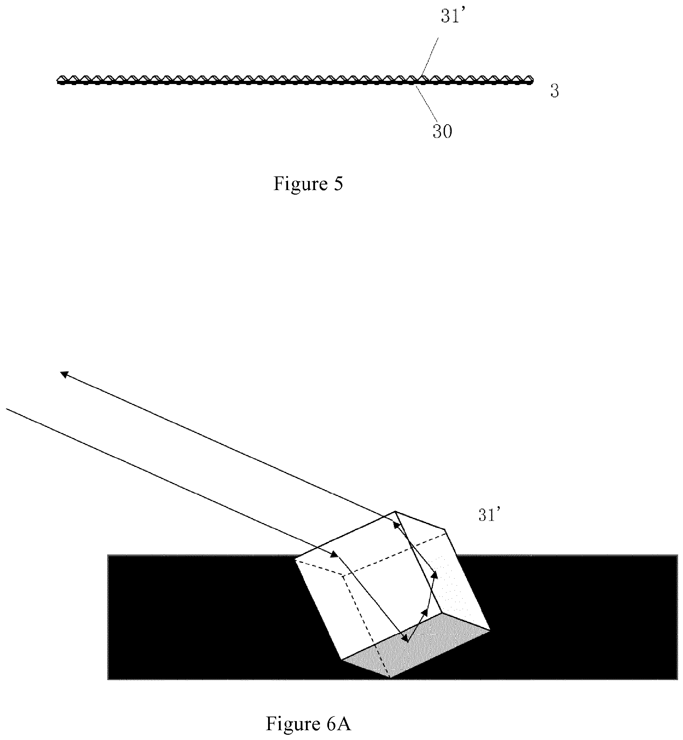

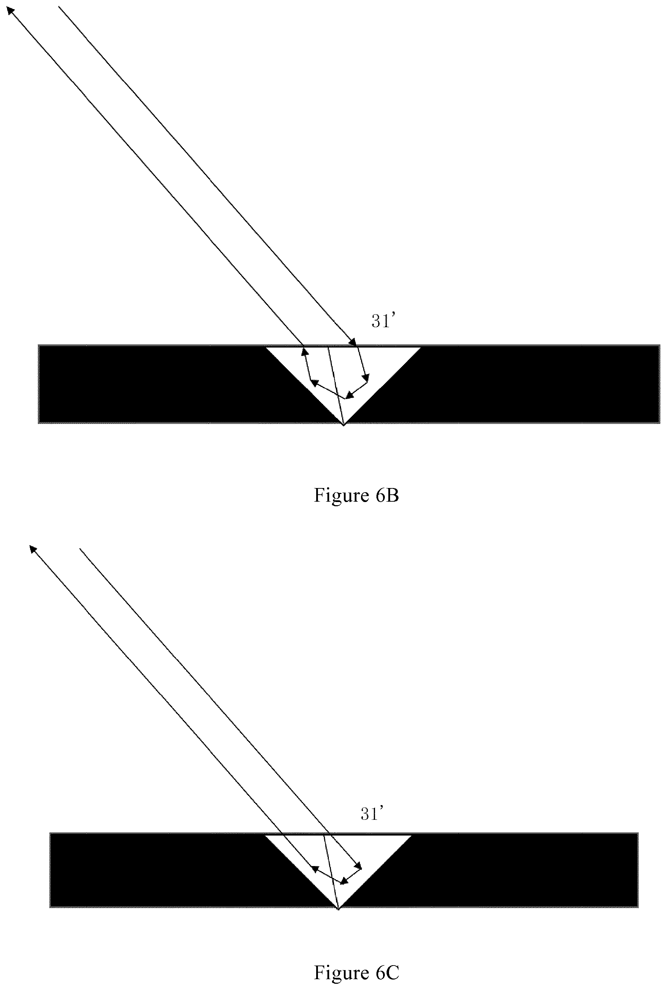

Referring to Figure 5, a retroreflective element according to another comparative example is illustrated. The substrate 30 of the retroreflective element 3 is also uniformly distributed with right-angle vertex microstructures 31'. The right-angle vertex microstructure 31' may be a transparent microstructured body, such as a micro-cube or a micro-cuboid, which is embedded on the substrate 30 and has at least one vertex, three edges of which are at right angles to each other (are perpendicular to each other), or a part, which contains the at least one vertex, of the transparent microstructured body. Of course, the at least one vertex is embedded in the substrate 30 (see Figure 6A). According to the invention, the right-angle vertex microstructure 31' is a micro-triangular pyramid, with three edges at right angles to each other, where the vertex of the right-angle vertex microstructure 31' is embedded in the substrate 30 (see Figures 6B and 6C); the bottom face of the right-angle vertex microstructure 31' that is opposite to the vertex is flush with the substrate 30; and an antireflective film is further formed on (attached to) the bottom face. In a more preferred embodiment, the angle between the bottom face and at least one of three faces formed by the three edges is less than 54 degrees.

It should be understood that, the three edges are of unequal lengths. The lengths of the edges are selected from the range from 20 µm to 5 mm. The length of the longest edge in the three edges does not exceed 10 times of the length of the shortest edge.

It should also be understood that the three faces formed by the three edges may also be perpendicular to each other, i.e., each of the dihedral angles between any two of the three faces may be 90 degrees; however, because the constraints of the manufacturing processes, even if these dihedral angles are not precisely 90 degrees, but in the case where the deviation is within a processing tolerance range of, for example, ±2 minutes, requirements of the present invention can also be satisfied.

In a comparative example, the right-angle vertex microstructure 31' may be a recessed portion formed by imprinting a portion of one of the vertices of the above microstructured body on the substrate 30 (see Figure 6C).

Figures 6A, 6B, and 6C illustrate enlarged views of the right-angle vertex microstructure and schematic views of the retroreflective path of the right-angle vertex microstructure as illustrated in Figure 5. In the embodiments as illustrated in Figure 6A and 6B, the right-angle vertex microstructure 31' is a transparent microstructured body. Light rays originated from the transflector are refracted at the incident surface (e.g., the upper surface) of the right-angle vertex microstructure 31' to irradiate on (to propagate toward) the high reflective coating of the film or curtain 30. After being reflected, for example, three times, the light rays irradiate back onto the incident surface (for example, the upper surface) of the right-angle vertex microstructure 31', and are refracted at the incident surface again to irradiate on (to propagate towards) the transflector. In the embodiment as illustrated in Figure 6C, the right-angle vertex microstructure 31' is a recessed portion, and after being transmitted through or reflected by the transflector, the light rays are directly incident on the recessed portion, and are then reflected, for example, three times, before irradiating on (propagating towards) the transflector. The structure of the right-angle vertex microstructure 31'allows the light rays to be capable of returning to the transflector almost via the original path (likewise, it can be considered that the light rays, when viewed in a macroscopic environment, are returned along the original path).

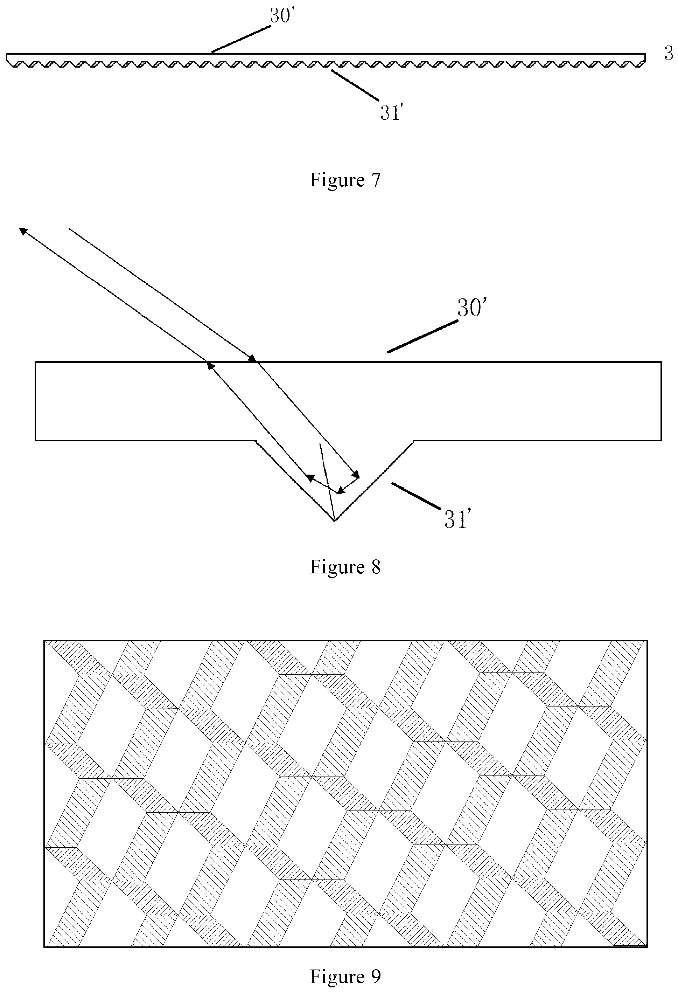

Fig. 7 illustrates a retroreflective element according to yet another comparative example. Right-angle vertex microstructures 31' are uniformly distributed on the substrate 30' of the retroreflective element 3. The substrate 30' itself is a transparent substrate, and the right-angle vertex microstructure 31' is also a transparent microstructured body. The faces of the right-angle vertex microstructure 31 away from the substrate 30' are coated with high reflective coatings.

The right-angle vertex microstructures 31' are preferably formed integrally with the substrate 30', and certainly, the right-angle vertex microstructures 31' and the substrate 30' may also be produced separately and then the right-angle vertex microstructures 31' are attached to the substrate 30'. In preferred cases, the material of the substrate 30' and the material of the right-angle vertex microstructure 31' are identical, or at least have a same refractive index.

Figure 8 illustrates an enlarged view of a right-angle vertex microstructure and a schematic diagram of the retroreflective path of the right-angle vertex microstructure as illustrated in Figure 7. Light rays originated from the transflector are refracted at the upper surface of the substrate 30' to irradiate on (to propagate towards) the high reflective coatings coated on the right-angle vertex microstructure 31'. After being reflected, for example, three times, the light rays irradiate back onto the upper surface of the substrate 30' and are refracted at the upper surface of the substrate 30' again to irradiate towards the transflector. The structure of the right-angle vertex microstructure 31' allows the light rays to be capable of returning to the transflector almost via the original path (as previously described, it can be considered that the light rays, when viewed in a macroscopic environment, are returned along the original path).

Figure 9 schematically illustrates the top view of the distribution of the microstructures on the retroreflective element according to an embodiment of the present invention, to better understand the distribution of the microstructures. As illustrated in Fig.9, a plurality of microstructures are distributed to allow the plurality of microstructures to be sequentially and immediately adjacent to each other, and extend over the retroreflective element. It is to be understood that, Figure 9 illustrates only a part of the retroreflective element and the microstructures may be distributed over the entire retroreflective element. In addition, although the microstructures as illustrated in Figure 9 are recessed portions similar to cuboids, it should be understood that the shape of the microstructures is not limited thereto, and may be any of the microstructures described above.

It should be understood that, in the present invention, although a reflective face (e.g., a face coated with a high reflective coating) of the retroreflective element is described as being a portion attached to the substrate in most cases, but, in some cases, it can also be considered that the reflective face is a portion attached to the microstructure. For example, the retroreflective element may be divided into a large number of retroreflective units, each of which includes a microstructure with a reflective face; the microstructure can be a spherical microstructure or a right-angle vertex microstructure as described above; or, the reflective face can even be described as a separate structure unit. For example, the retroreflective units each include a reflective face, and the reflective face can be attached to at least one of the first material and the second material thereon; and the reflective face can be formed by one or more faces of the aforementioned microstructure.

According to the embodiments of the present invention, it is possible to directly form an image in the air, even in vacuum, without adopting an auxiliary equipment such as helmet, an imaging screen or a particulate medium in the air. Embodiments of the present invention relate to a technology for imaging in the air in a true sense. Because the generated image suspends in the air, lot of interactions and applications can be developed, which is of an epoch-making significance.

In accordance with an aspect of the present invention, a system for imaging in the air is provided, and the system for imaging in the air includes an image source, a transflector and a retroreflective element. Light rays emitted by the image source are reflected by the transflector to irradiate on the retroreflective element, and the light rays are subjected to reflection on the retroreflective element to propagate along an original incident path in an opposite direction, and then to be transmitted through the transflector to form a real image.

In accordance with another aspect of the present invention, a system for imaging in the air is provided, and the system for imaging in the air includes an image source, a transflector, and a retroreflective element. Light rays emitted by the image source are transmitted through the transflector to irradiate on the retroreflective element, and the light rays are subjected to reflection on the retroreflective element to propagate along an original incident path in an opposite direction, and then to be reflected by the transflector to form a real image.

According to yet another aspect of the present invention, a system for imaging in the air is provided, and the system for imaging in the air includes an image source, a transflector, a first retroreflective element and a second retroreflective element. Light rays emitted by the image source are reflected by the transflector to irradiate on the first retroreflective element, and the light rays are subjected to reflection on the first retroreflective element to propagate along an original incident path in an opposite direction, and then to be transmitted through the transflector to form a first real image; and additionally, the light rays emitted by the image source are transmitted through the transflector to irradiate on the second retroreflective element, and the light rays are subjected to reflection on the second retroreflective element to propagate along an original incident path in an opposite direction, and then to be reflected by the transflector to form a second real image.

In accordance with another aspect of the present invention, a system for imaging in the air is provided, and the system for imaging in the air includes a first image source, a second image source, a transflector, and a retroreflective element. Light rays emitted by the first image source are reflected by the transflector to irradiate on the retroreflective element, and the light rays emitted by the first image source are subjected to reflection on the retroreflective element to propagate along an original incident path in an opposite direction and then to be transmitted through the transflector to form a first real image; light rays emitted by the second image source are transmitted through the transflector to irradiate on the retroreflective element, and the light rays emitted by the second image source are subjected to reflection on the retroreflective element to propagate along an original incident path in an opposite direction and then to be reflected by the transflector to form a second real image; and positions of the first image source and the second image source are configured so that the first real image and the second real image are formed at same one position.

Preferably, the image source is an imaging device that outputs a virtual image or a real image, or a virtual image or a real image formed by the imaging device.

Preferably, a light source of the image source is one or more of a laser, a light-emitting diode, an organic light-emitting diode, and a stimulated fluorescent light-emitting material.

Preferably, a transmittance of the transflector is in ranges from 20% to 80%.

Preferably, reflectivity of the transflector is in ranges from 20% to 80%.

In a preferred embodiment, the retroreflective element comprises a substrate with a reflective face, and a microstructure on the substrate.

The microstructure is a right-angle vertex microstructure made of a transparent material, in which the right-angle vertex microstructure comprises at least one right-angle vertex and three edges, that intersect at the at least one right-angle vertex, of the right-angle vertex microstructure are at right angles to each other.

Preferably, the reflective face is formed on a face of the substrate facing the microstructure.

Preferably, the reflective face is formed on an interface between the substrate and the microstructure.

Preferably, the microstructure and the substrate are integrally formed by same transparent one material, the right-angle vertex protrudes outwardly, and the reflective face is formed on three faces, each of which is formed by intersecting of two of the three edges that are intersect at the right-angle vertex intersect each other.

Preferably, the microstructure is uniformly distributed over the substrate.

Preferably, the substrate is a film, a curtain or a plate.

In another preferred embodiment, the retroreflective element includes a plurality of retroreflective units.

Preferably, the retroreflective units each include a microstructure with a reflective face.

Preferably, the microstructure is a right-angle vertex microstructure made of a transparent material, where the right-angle vertex microstructure comprises at least one right-angle vertex, and three edges, that intersect at the at least one right-angle vertex, of the right-angle vertex microstructure are at right angles to each other, and three faces, each of which is formed by intersecting of two of the three edges, or at least partial regions of the three faces form the reflective face.

Preferably, the microstructure is a recessed portion including a right-angle vertex microstructure, where the right-angle vertex microstructure comprises at least one right-angle vertex, and three edges, that intersect at the at least one right-angle vertex, of the right-angle vertex microstructure are at right angles to each other, and three faces, each of which is formed by intersecting of two of the three edges, or at least partial regions of the three faces form the reflective face.

Preferably, the reflective face of the microstructure is attached to or formed integrally with a substrate, and the substrate is configured to carry the retroreflective element.

Preferably, a face other than the reflective face of the microstructure is attached to or formed integrally with a transparent substrate, and the substrate is configured to carry the retroreflective element.

**In** yet another preferred embodiment, the retroreflective element also includes a plurality of retroreflective units.

Preferably, the retroreflective units each include one of a first material and a second material, and the retroreflective units each further include a reflective face. The first material is a transparent solid material; the first material, as viewed from an incident path of the light rays, is positioned in front of the reflective face, and the light rays are incident on the retroreflective unit through the first material and then are reflected by the reflective face, before exiting the retroreflective unit from the first material; and the second material, as viewed from the incident path of the light rays, is positioned rearward of the reflective face.

Preferably, the retroreflective units each comprise a first material and a second material, and the retroreflective units each further comprise a reflective face, in which, the first material is air or vacuum, and the second material is a film, a curtain or a plate; the first material, as viewed from the incident path of the light rays, is positioned in front of the reflective face, and the light rays are incident on the retroreflective unit through the first material and then are reflected by the reflective face, before exiting the retroreflective unit from the first material; and the second material, as viewed from the incident path of the light rays, is positioned rearward of the reflective face.

Preferably, the reflective face is three faces, each of which is formed by intersecting two of three edges that are intersect at a right-angle vertex, or at least part of regions of the three faces, and the three edges that are intersect at the right-angle vertex are at right angles to each other.

Preferably, the reflective face is a part of a surface of a sphere, and a center of the sphere is positioned in front of the reflective face, as viewed from the incident path of the light rays.

Preferably, the second material is a film, a curtain or plate.

Preferably, the three edges that are intersect at the right-angle vertex are of equal length.

Preferably, the reflective face is attached with a high reflective material.

Preferably, a reflectivity of the high reflective material is more than 60%, more than 70%, more than 80%, or more than 90%.

Preferably, the high reflective material is attached on the reflective face by spray coating or film coating.

Preferably, the retroreflective element comprises a curvature bent towards the transflector.

Preferably, the microstructure is uniformly distributed over the retroreflective element.

Preferably, the image source is a stereoscopic image source.

Preferably, the stereoscopic image source is a three-dimensional stereoscopic display device capable of displaying three-dimensional stereoscopic images, structures, and video sources.

Preferably, the three-dimensional stereoscopic display device includes a translational scan imaging system or a rotational scan imaging system.

Preferably, one of two faces of the transflector is attached with a transflective material such that the reflectivity ranges from 20% to 80% and corresponding transmittance ranges from 80% to 20%.

Preferably, a face, which is not attached with a transflective material, of the two faces of the transflector is attached with an antireflective material.

A length of a longest edge does not exceed 10 times of a length of a shortest edge.

Preferably, when the first material is a transparent solid material, an incidence face of the transparent solid material is attached with an antireflection material.

Preferably, when the first material is a transparent solid material, an incident face of the transparent solid material is a plane.

Preferably, an angle between the incident face and at least one of three faces formed by the three edges is less than 54 degrees.

According to a major of the present invention, a method for imaging in the air is provided that includes following steps of:
providing an image source, a transflector and a retroreflective element;
reflecting, by the transflector, light rays emitted by the image source, to irradiate on the retroreflective element; and
allowing the light rays to be subjected to reflection on the retroreflective element to propagate along an original incident path in an opposite direction, and then allowing the light rays to be transmitted through the transflector to form a real image.

According to another aspect of the present invention, a method for imaging in the air is provided, the method includes following steps of:
providing an image source, a transflector and a retroreflective element;
transmitting, through the transflector, light rays emitted by the image source, to irradiate on the retroreflective element; and
allowing the light rays to be subjected to reflection on the retroreflective element to propagate along an original incident path in an opposite direction, and then allowing the light rays to be to be reflected by the transflector to form a real image.

According to yet another aspect of the present invention, a method for imaging in the air is provided, the method includes following steps of:
providing an image source, a transflector, a first retroreflective element and a second retroreflective element;
reflecting, by the transflector, light rays emitted by the image source, to irradiate on the first retroreflective element, and transmitting, through the transflector, the light rays emitted by the image source, to irradiate on the second retroreflective element;
allowing the light rays to be subjected to reflection on the first retroreflective element to propagate along an original incident path in an opposite direction and allowing the light rays to be transmitted through the transflector to form a first real image, and allowing the light rays to be subjected to reflection on the second retroreflective element to propagate along an original incident path in an opposite direction and allowing the light rays to be reflected by the transflector to form a second real image.

According to another aspect of the present invention, a method for imaging in the air is provided, the method includes following steps of:
providing a first image source, a second image source, a transflector, and a retroreflective element;
reflecting, by the transflector, light rays emitted by the first image source, to irradiate on the retroreflective element, and transmitting, through the transflector, light rays emitted by the second image source, to irradiate on the retroreflective element;
allowing the light rays emitted by the first image source to be subjected to reflection on the retroreflective element to propagate along an original incident path in an opposite direction and allowing the light rays to be transmitted through the transflector to form a first real image, and allowing the light rays emitted by the second image source to be subjected to reflection on the retroreflective element to propagate along an original incident path in an opposite direction and allowing the light rays to be reflected by the transflector to form a second real image; and
configuring positions of the first image source and the second image source, such that the first real image and the second real image are formed at substantially the same position.

It is to be understood that the foregoing description of the disclosed embodiments can enable those skilled in the art to realize or use the present invention. It is to be understood that, the features disclosed in the above embodiments can be used alone or in combination, unless otherwise defined. Modifications to these embodiments will be readily apparent to those skilled in the art. General principles defined in the present invention can be implemented in other embodiments, without departing from the spirit or scope of the present invention. Accordingly, the invention disclosed herein is not limited to the specific embodiments disclosed, but is defined in the appended set of claims.

## Claims

1. A system for imaging in the air, comprising:
an image source (1),
a transflector (2), and
a retroreflective element (3),
wherein light rays emitted by the image source (1) are reflected by the transflector (2) to irradiate on the retroreflective element (3), and the light rays are subjected to reflection on the retroreflective element (3) to propagate along an original incident path in an opposite direction, and then to be transmitted through the transflector (2) to form a real image (4);
the retroreflective element (3) comprises a plurality of retroreflective units;
the retroreflective units each comprise a microstructure (31, 31');
the microstructure (31, 31') comprises a right-angle vertex microstructure (31) made of a transparent material;
the right-angle vertex microstructure (31') comprises at least one right-angle vertex, and three edges, that intersect at the at least one right-angle vertex, of the right-angle vertex microstructure (31') are at right angles to each other,
**characterized in that**:
in the same right-angle vertex microstructure (31'), the three edges each have a length ranging from 20µm to 5mm, the three edges are unequal in length, and a length of a longest edge does not exceed 10 times of a length of a shortest edge,
the right-angle vertex microstructure (31') is a micro-triangular pyramid, with the three edges at right angles to each other, where the right-angle vertex of the right-angle vertex microstructure (31') is embedded in a substrate (30, 30'); a bottom face of the right-angle vertex microstructure (31') that is opposite to the right-angle vertex is flush with the substrate (30, 30'), and an antireflective film is further formed on the bottom face.

2. The system of claim 1, wherein the microstructure (31, 31') is provided with a reflective face.

3. The system of claim 2, wherein the right-angle vertex microstructure (31') is made of a transparent material;
three faces, each of which is formed by intersecting of two of the three edges, or at least partial regions of the three faces form the reflective face.

4. The system of claim 3, wherein a face other than the reflective face of the microstructure (31, 31') is attached to or formed integrally with the substrate that is a transparent substrate, and the substrate is configured to carry the retroreflective units.

5. The system of claim 3, wherein the reflective face is attached to or formed integrally with the substrate (30, 30'); and
the substrate (30, 30') is configured to carry the retroreflective units.

6. The system of claim 1, wherein the retroreflective element (3) comprises a curvature bent toward the transflector (2).

7. The system of claim 1, wherein the retroreflective units each comprise at least one of a first material and a second material, and the retroreflective units each further comprise a reflective face;
the first material is a transparent solid material;
the first material, as viewed from an incident path of the light rays, is positioned in front of the reflective face;
the light rays are incident on the retroreflective unit through the first material, and then are reflected by the reflective face before exiting the retroreflective unit from the first material; and
the second material, as viewed from the incident path of the light rays, is positioned at rearward of the reflective face.

8. The system of claim 1, wherein the retroreflective units each comprise a first material and a second material, and the retroreflective units each further comprise a reflective face;
the first material is air or vacuum, and the second material is a film, a curtain or a plate;
the first material, as viewed from an incident path of the light rays, is positioned in front of the reflective face;
the light rays are incident on the retroreflective unit through the first material and then are reflected by the reflective face, before exiting the retroreflective unit from the first material; and
the second material, as viewed from the incident path of the light rays, is positioned rearward of the reflective face.

9. The system of claim 8, wherein the second material is a film, a curtain or a plate; or the reflective face comprises three faces, each of which is formed by intersecting two of three edges that are intersect at a right-angle vertex, or at least part of regions of the three faces, and the three edges that are intersect at the right-angle vertex are at right angles to each other.

10. The system of claim 1, wherein the retroreflective element (3) comprises the substrate (30, 30') with a reflective face and the microstructure (31, 31') on the substrate (30, 30').

11. The system of claim 10, wherein the microstructure (31, 31') is made of a transparent material.

12. The system of claim 10, wherein the reflective face is formed on a surface of the substrate (30, 30') facing toward the microstructure (31, 31'), or is formed on an interface between the substrate (30, 30') and the microstructure (31, 31'); or
the retroreflective element (3) comprises a plurality of microstructures (31, 31') on the substrate (30, 30'), and the microstructures (31, 31') are uniformly distributed over the substrate (30, 30').

13. The system of any one of claims 1-12, wherein an angle between the bottom face and at least one of three faces formed by the three edges is less than 54 degrees.

14. A system for imaging in the air, comprising:
an image source (1),
a transflector (2), and
a retroreflective element (3),
wherein light rays emitted by the image source (1) are transmitted by the transflector (2) to irradiate on the retroreflective element (3), and the light rays are subjected to reflection on the retroreflective element (3) to propagate along an original incident path in an opposite direction and then to be reflected by the transflector (2) to form a real image (4);
the retroreflective element (3) comprises a plurality of retroreflective units;
the retroreflective units each comprise a microstructure (31, 31');
the microstructure (31, 31') comprises a right-angle vertex microstructure (31) made of a transparent material;
the right-angle vertex microstructure (31') comprises at least one right-angle vertex, and three edges, that intersect at the at least one right-angle vertex, of the right-angle vertex microstructure (31') are at right angles to each other,
**characterized in that**:
in the same right-angle vertex microstructure (31'), the three edges each have a length ranging from 20µm to 5mm, the three edges are unequal in length, and a length of a longest edge does not exceed 10 times of a length of a shortest edge,
the right-angle vertex microstructure (31') is a micro-triangular pyramid, with the three edges at right angles to each other, where the right-angle vertex of the right-angle vertex microstructure (31') is embedded in a substrate (30); a bottom face of the right-angle vertex microstructure (31') that is opposite to the right-angle vertex is flush with the substrate (30), and an antireflective film is further formed on the bottom face.

15. A system for imaging in the air, comprising:
an image source (1),
a transflector (2),
a first retroreflective element and
a second retroreflective element,
wherein light rays emitted by the image source (1) are reflected by the transflector (2) to irradiate on the first retroreflective element, and the light rays are subjected to reflection on the first retroreflective element to propagate along an original incident path in an opposite direction and then to be transmitted through the transflector (2) to form a first real image; and
additionally, the light rays emitted by the image source (1) are transmitted through the transflector (2) to irradiate on the second retroreflective element, and the light rays are subjected to reflection on the second retroreflective element to propagate along an original incident path in an opposite direction and then to be reflected by the transflector (2) to form a second real image;
each of the first retroreflective element and the second retroreflective element comprises a plurality of retroreflective units;
the retroreflective units each comprise a microstructure (31, 31');
the microstructure (31, 31') comprises a right-angle vertex microstructure (31) made of a transparent material;
the right-angle vertex microstructure (31') comprises at least one right-angle vertex, and three edges, that intersect at the at least one right-angle vertex, of the right-angle vertex microstructure (31') are at right angles to each other,
**characterized in that**:
in the same right-angle vertex microstructure (31'), the three edges each have a length ranging from 20µm to 5mm, the three edges are unequal in length, and a length of a longest edge does not exceed 10 times of a length of a shortest edge,
the right-angle vertex microstructure (31') is a micro-triangular pyramid, with the three edges at right angles to each other, where the right-angle vertex of the right-angle vertex microstructure (31') is embedded in a substrate (30); a bottom face of the right-angle vertex microstructure (31') that is opposite to the right-angle vertex is flush with the substrate (30), and an antireflective film is further formed on the bottom face.

## Patentansprüche

1. System zur Bildgebung in der Luft, welches Folgendes umfasst:
eine Bildquelle (1),
einen Transflektor (2), und
ein retroreflektierendes Element (3),
wobei Lichtstrahlen, die durch die Bildquelle (1) emittiert werden, durch den Transflektor (2) reflektiert werden, um auf das retroreflektierende Element (3) abgestrahlt zu werden, und die Lichtstrahlen einer Reflexion an dem retroreflektierenden Element (3) unterzogen werden, um entlang eines ursprünglichen Einfallspfades in einer entgegengesetzten Richtung zu propagieren und dann durch den Transflektor (2) transmittiert zu werden, um ein reales Bild (4) zu bilden;
das retroreflektierende Element (3) mehrere retroreflektierende Einheiten umfasst;
die retroreflektierenden Einheiten jeweils eine Mikrostruktur (31, 31') umfassen;
die Mikrostruktur (31, 31') eine Mikrostruktur (31) mit rechtwinkligem Eckpunkt umfasst, welche aus einem transparenten Material gefertigt ist;
die Mikrostruktur (31') mit rechtwinkligem Eckpunkt wenigstens einen rechtwinkligen Eckpunkt umfasst und drei Kanten, die sich an dem wenigstens einen rechtwinkligen Eckpunkt schneiden, der Mikrostruktur (31') mit rechtwinkligem Eckpunkt unter rechten Winkel zueinander stehen,
**dadurch gekennzeichnet, dass**
in derselben Mikrostruktur (31') mit rechtwinkligem Eckpunkt die drei Kanten jeweils eine Länge im Bereich von 20 µm bis 5 mm aufweisen, die drei Kanten ungleich lang sind und eine Länge einer längsten Kante das 10-Fache einer Länge einer kürzesten Kante nicht überschreitet,
die Mikrostruktur (31') mit rechtwinkligem Eckpunkt eine dreieckige Mikropyramide ist, wobei die drei Kanten unter rechten Winkeln zueinander stehen, wobei der rechtwinklige Eckpunkt der Mikrostruktur (31') mit rechtwinkligem Eckpunkt in einem Substrat (30, 30') eingebettet ist; eine untere Fläche der Mikrostruktur (31') mit rechtwinkligem Eckpunkt, die dem rechtwinkligen Eckpunkt gegenüberliegt, bündig mit dem Substrat (30, 30') ist und ein Antireflexionsfilm ferner auf der unteren Fläche gebildet ist.

2. System nach Anspruch 1, wobei die Mikrostruktur (31, 31') mit einer reflektierenden Fläche versehen ist.

3. System nach Anspruch 2, wobei die Mikrostruktur (31') mit rechtwinkligem Eckpunkt aus einem transparenten Material gefertigt ist;
drei Flächen, die jeweils durch Schneiden von zwei der drei Kanten gebildet werden, oder wenigstens Teilgebiete der drei Flächen die reflektierende Fläche bilden.

4. System nach Anspruch 3, wobei eine Fläche außer der reflektierendem Fläche der Mikrostruktur (31, 31') an dem Substrat, das ein transparentes Substrat ist, angebracht oder integral mit diesem gebildet ist, und das Substrat dazu ausgelegt ist, die retroreflektierenden Einheiten zu tragen.

5. System nach Anspruch 3, wobei die reflektierende Fläche an dem Substrat (30, 30') angebracht oder integral mit diesem gebildet ist; und
das Substrat (30, 30') dazu ausgelegt ist, die retroreflektierenden Einheiten zu tragen.

6. System nach Anspruch 1, wobei das retroreflektierende Element (3) eine Krümmung umfasst, die zu dem Transflektor (2) hin gebogen ist.

7. System nach Anspruch 1, wobei die retroreflektierenden Einheiten jeweils ein erstes Material und/oder ein zweites Material umfassen und die retroreflektierenden Einheiten jeweils ferner eine reflektierende Fläche umfassen;
das erste Material ein transparentes festes Material ist; das erste Material bei Betrachtung von einem Einfallspfad der Lichtstrahlen vor der reflektierenden Fläche positioniert ist;
die Lichtstrahlen durch das erste Material auf die retroreflektierende Einheit einfallen und dann durch die reflektierende Fläche reflektiert werden, bevor sie die retroreflektierende Einheit aus dem ersten Material verlassen; und
das zweite Material bei Betrachtung von dem Einfallspfad der Lichtstrahlen hinter der reflektierenden Fläche positioniert ist.

8. System nach Anspruch 1, wobei die retroreflektierenden Einheiten jeweils ein erstes Material und ein zweites Material umfassen und die retroreflektierenden Einheiten jeweils ferner eine reflektierende Fläche umfassen;
das erste Material Luft oder Vakuum ist und das zweite Material ein Film, ein Vorhang oder eine Platte ist; das erste Material bei Betrachtung von einem Einfallspfad der Lichtstrahlen vor der reflektierenden Fläche positioniert ist;
die Lichtstrahlen durch das erste Material auf die retroreflektierende Einheit einfallen und dann durch die reflektierende Fläche reflektiert werden, bevor sie die retroreflektierende Einheit aus dem ersten Material verlassen; und
das zweite Material bei Betrachtung von dem Einfallspfad der Lichtstrahlen hinter der reflektierenden Fläche positioniert ist.

9. System nach Anspruch 8, wobei das zweite Material ein Film, ein Vorhang oder eine Platte ist; oder
die reflektierende Fläche drei Flächen, von denen jede durch Schneiden von zwei von drei Kanten gebildet ist, die sich in einem rechtwinkligen Eckpunkt schneiden, oder wenigstens einem Teil von Gebieten der drei Flächen umfasst, und die drei Kanten, die sich in dem rechtwinkligen Eckpunkt schneiden, unter rechten Winkeln zueinander stehen.

10. System nach Anspruch 1, wobei das retroreflektierende Element (3) das Substrat (30, 30') mit einer reflektierenden Fläche und die Mikrostruktur (31, 31') auf dem Substrat (30, 30') umfasst.

11. System nach Anspruch 10, wobei die Mikrostruktur (31, 31') aus einem transparenten Material gefertigt ist.

12. System nach Anspruch 10, wobei die reflektierende Fläche auf einer Oberfläche des Substrats (30, 30') gebildet ist, die der Mikrostruktur (31, 31') zugewandt ist, oder auf einer Grenzfläche zwischen dem Substrat (30, 30') und der Mikrostruktur (31, 31') gebildet ist; oder
das retroreflektierende Element (3) mehrere Mikrostrukturen (31, 31') auf dem Substrat (30, 30') umfasst und die Mikrostrukturen (31, 31') gleichmäßig über das Substrat (30, 30') verteilt sind.

13. System nach einem der Ansprüche 1-12, wobei ein Winkel zwischen der unteren Fläche und wenigstens einer von drei Flächen, die durch die drei Kanten gebildet werden, weniger als 54 Grad beträgt.

14. System zur Bildgebung in der Luft, welches Folgendes umfasst:
eine Bildquelle (1),
einen Transflektor (2), und
ein retroreflektierendes Element (3),
wobei Lichtstrahlen, die durch die Bildquelle (1) emittiert werden, durch den Transflektor (2) transmittiert werden, um auf das retroreflektierende Element (3) abgestrahlt zu werden, und die Lichtstrahlen einer Reflexion an dem retroreflektierenden Element (3) unterzogen werden, um entlang eines ursprünglichen Einfallspfades in einer entgegengesetzten Richtung zu propagieren und dann durch den Transflektor (2) reflektiert zu werden, um ein reales Bild (4) zu bilden; das retroreflektierende Element (3) mehrere retroreflektierende Einheiten umfasst;
die retroreflektierenden Einheiten jeweils eine Mikrostruktur (31, 31') umfassen;
die Mikrostruktur (31, 31') eine Mikrostruktur (31) mit rechtwinkligem Eckpunkt umfasst, welche aus einem transparenten Material gefertigt ist;
die Mikrostruktur (31') mit rechtwinkligem Eckpunkt wenigstens einen rechtwinkligen Eckpunkt umfasst und drei Kanten, die sich an dem wenigstens einen rechtwinkligen Eckpunkt schneiden, der Mikrostruktur (31') mit rechtwinkligem Eckpunkt unter rechten Winkel zueinander stehen,
**dadurch gekennzeichnet, dass**
in derselben Mikrostruktur (31') mit rechtwinkligem Eckpunkt die drei Kanten jeweils eine Länge im Bereich von 20 µm bis 5 mm aufweisen, die drei Kanten ungleich lang sind und eine Länge einer längsten Kante das 10-Fache einer Länge einer kürzesten Kante nicht überschreitet,
die Mikrostruktur (31') mit rechtwinkligem Eckpunkt eine dreieckige Mikropyramide ist, wobei die drei Kanten unter rechten Winkeln zueinander stehen, wobei der rechtwinklige Eckpunkt der Mikrostruktur (31') mit rechtwinkligem Eckpunkt in einem Substrat (30) eingebettet ist; eine untere Fläche der Mikrostruktur (31') mit rechtwinkligem Eckpunkt, die dem rechtwinkligen Eckpunkt gegenüberliegt, bündig mit dem Substrat (30) ist und ein Antireflexionsfilm ferner auf der unteren Fläche gebildet ist.

15. System zur Bildgebung in der Luft, welches Folgendes umfasst:
eine Bildquelle (1),
einen Transflektor (2),
ein erstes retroreflektierendes Element und
ein zweites retroreflektierendes Element,
wobei Lichtstrahlen, die durch die Bildquelle (1) emittiert werden, durch den Transflektor (2) reflektiert werden, um auf das erste retroreflektierende Element abgestrahlt zu werden, und die Lichtstrahlen einer Reflexion an dem ersten retroreflektierenden Element unterzogen werden, um entlang eines ursprünglichen Einfallspfades in einer entgegengesetzten Richtung zu propagieren und dann durch den Transflektor (2) transmittiert zu werden, um ein erstes reales Bild zu bilden; und
außerdem die Lichtstrahlen, die durch die Bildquelle (1) emittiert werden, durch den Transflektor (2) transmittiert werden, um auf das zweite retroreflektierende Element abgestrahlt zu werden, und die Lichtstrahlen einer Reflexion an dem zweiten retroreflektierenden Element unterzogen werden, um entlang eines ursprünglichen Einfallspfades in einer entgegengesetzten Richtung zu propagieren und dann durch den Transflektor (2) reflektiert zu werden, um ein zweites reales Bild zu bilden;
sowohl das erste retroreflektierende Element als auch das zweite retroreflektierende Element mehrere retroreflektierende Einheiten umfassen;
die retroreflektierenden Einheiten jeweils eine Mikrostruktur (31, 31') umfassen;
die Mikrostruktur (31, 31') eine Mikrostruktur (31) mit rechtwinkligem Eckpunkt umfasst, welche aus einem transparenten Material gefertigt ist;
die Mikrostruktur (31') mit rechtwinkligem Eckpunkt wenigstens einen rechtwinkligen Eckpunkt umfasst und drei Kanten, die sich an dem wenigstens einen rechtwinkligen Eckpunkt schneiden, der Mikrostruktur (31') mit rechtwinkligem Eckpunkt unter rechten Winkel zueinander stehen, **dadurch gekennzeichnet, dass**:
in derselben Mikrostruktur (31') mit rechtwinkligem Eckpunkt die drei Kanten jeweils eine Länge im Bereich von 20 µm bis 5 mm aufweisen, die drei Kanten ungleich lang sind und eine Länge einer längsten Kante das 10-Fache einer Länge einer kürzesten Kante nicht überschreitet,
die Mikrostruktur (31') mit rechtwinkligem Eckpunkt eine dreieckige Mikropyramide ist, wobei die drei Kanten unter rechten Winkeln zueinander stehen, wobei der rechtwinklige Eckpunkt der Mikrostruktur (31') mit rechtwinkligem Eckpunkt in einem Substrat (30) eingebettet ist; eine untere Fläche der Mikrostruktur (31') mit rechtwinkligem Eckpunkt, die dem rechtwinkligen Eckpunkt gegenüberliegt, bündig mit dem Substrat (30) ist und ein Antireflexionsfilm ferner auf der unteren Fläche gebildet ist.

## Revendications

1. Système d'imagerie dans l'air comprenant :
une source d'image (1),
un transflecteur (2), et
un élément rétroréfléchissant (3),
dans lequel des rayons lumineux émis par la source d'image (1) sont réfléchis par le transflecteur (2) pour irradier l'élément rétroréfléchissant (3), et les rayons lumineux sont soumis à une réflexion sur l'élément rétroréfléchissant (3) pour se propager le long d'un trajet incident original dans une direction opposée, puis pour être transmis à travers le transflecteur (2) afin de former une image réelle (4) ;
l'élément rétroréfléchissant (3) comprend une pluralité d'unités rétroréfléchissantes ;
les unités rétroréfléchissantes comprennent chacune une microstructure (31, 31') ;
la microstructure (31, 31') comprend une microstructure à sommet à angle droit (31) constituée d'un matériau transparent ;
la microstructure à sommet à angle droit (31') comprend au moins un sommet à angle droit, et trois arêtes, qui se croisent au niveau de l'au moins un sommet à angle droit de la microstructure à sommet à angle droit (31'), sont à angle droit les unes par rapport aux autres,
**caractérisé en ce que** :
dans une même microstructure à sommet à angle droit (31'), les trois arêtes présentent chacune une longueur allant de 20 µm à 5 mm, les trois arêtes sont de longueurs inégales, et une longueur d'une arête la plus longue ne dépasse pas 10 fois une longueur d'une arête la plus courte,
la microstructure à sommet à angle droit (31') est une micro-pyramide triangulaire, dont les trois arêtes sont à angle droit les unes par rapport aux autres, le sommet à angle droit de la microstructure à sommet à angle droit (31') étant incorporé dans un substrat (30, 30') ; une face inférieure de la microstructure à sommet à angle droit (31') opposée au sommet à angle droit est affleurante avec le substrat (30, 30'), et un film antireflet est en outre formé sur la face inférieure.

2. Système selon la revendication 1, dans lequel la microstructure (31, 31') est pourvue d'une face réfléchissante.

3. Système selon la revendication 2, dans lequel la microstructure à sommet à angle droit (31') est constituée d'un matériau transparent ;
trois faces, dont chacune est formée par l'intersection de deux des trois arêtes, ou au moins des régions partielles des trois faces forment la face réfléchissante.

4. Système selon la revendication 3, dans lequel une face autre que la face réfléchissante de la microstructure (31, 31') est fixée au substrat, qui est un substrat transparent, ou formée d'un seul tenant avec celui-ci, et le substrat est configuré pour porter les unités rétroréfléchissantes.

5. Système selon la revendication 3, dans lequel la face réfléchissante est fixée au substrat (30, 30') ou formée d'un seul tenant avec celui-ci ; et
le substrat (30, 30') est configuré pour porter les unités rétroréfléchissantes.

6. Système selon la revendication 1, dans lequel l'élément rétroréfléchissant (3) comprend une courbure infléchie vers le transflecteur (2).

7. Système selon la revendication 1, dans lequel les unités rétroréfléchissantes comprennent chacune au moins l'un d'un premier matériau et d'un second matériau, et les unités rétroréfléchissantes comprennent chacune en outre une face réfléchissante ;
le premier matériau est un matériau plein transparent ; le premier matériau, vu depuis un trajet incident des rayons lumineux, est disposé à l'avant de la face réfléchissante ;
les rayons lumineux sont incidents sur l'unité rétroréfléchissante à travers le premier matériau, puis sont réfléchis par la face réfléchissante avant de sortir de l'unité rétroréfléchissante depuis le premier matériau ; et
le second matériau, vu depuis le trajet incident des rayons lumineux, est disposé à l'arrière de la face réfléchissante.

8. Système selon la revendication 1, dans lequel les unités rétroréfléchissantes comprennent chacune un premier matériau et un second matériau, et les unités rétroréfléchissantes comprennent chacune en outre une face réfléchissante ;
le premier matériau est l'air ou le vide, et le second matériau est un film, un rideau ou une plaque ;
le premier matériau, vu depuis un trajet incident des rayons lumineux, est disposé à l'avant de la face réfléchissante ;
les rayons lumineux sont incidents sur l'unité rétroréfléchissante à travers le premier matériau puis sont réfléchis par la face réfléchissante, avant de sortir de l'unité rétroréfléchissante depuis le premier matériau ; et
le second matériau, vu depuis le trajet incident des rayons lumineux, est disposé à l'arrière de la face réfléchissante.

9. Système selon la revendication 8, dans lequel le second matériau est un film, un rideau ou une plaque ; ou
la face réfléchissante comprend trois faces, dont chacune est formée par l'intersection de deux des trois arêtes qui se coupent au niveau d'un sommet à angle droit, ou au moins une partie de régions des trois faces, et les trois arêtes qui se coupent au niveau du sommet à angle droit sont à angle droit les unes par rapport aux autres.

10. Système selon la revendication 1, dans lequel l'élément rétroréfléchissant (3) comprend le substrat (30, 30') ayant une face réfléchissante et la microstructure (31, 31') sur le substrat (30, 30').

11. Système selon la revendication 10, dans lequel la microstructure (31, 31') est constituée d'un matériau transparent.

12. Système selon la revendication 10, dans lequel la face réfléchissante est formée sur une surface du substrat (30, 30') tournée vers la microstructure (31, 31'), ou est formée sur une interface entre le substrat (30, 30') et la microstructure (31, 31') ; ou l'élément rétroréfléchissant (3) comprend une pluralité de microstructures (31, 31') sur le substrat (30, 30'), et les microstructures (31, 31') sont réparties uniformément sur le substrat (30, 30').

13. Système selon l'une quelconque des revendications 1 à 12, dans lequel un angle entre la face inférieure et au moins l'une des trois faces formées par les trois arêtes est inférieur à 54 degrés.

14. Système d'imagerie dans l'air comprenant :
une source d'image (1),
un transflecteur (2), et
un élément rétroréfléchissant (3),
dans lequel des rayons lumineux émis par la source d'image (1) sont transmis par le transflecteur (2) pour irradier l'élément rétroréfléchissant (3), et les rayons lumineux sont soumis à une réflexion sur l'élément rétroréfléchissant (3) pour se propager le long d'un trajet incident original dans une direction opposée, puis pour être réfléchis par le transflecteur (2) afin de former une image réelle (4) ;
l'élément rétroréfléchissant (3) comprend une pluralité d'unités rétroréfléchissantes ;
les unités rétroréfléchissantes comprennent chacune une microstructure (31, 31') ;
la microstructure (31, 31') comprend une microstructure à sommet à angle droit (31) constituée d'un matériau transparent ;
la microstructure à sommet à angle droit (31') comprend au moins un sommet à angle droit, et trois arêtes, qui se croisent au niveau de l'au moins un sommet à angle droit de la microstructure à sommet à angle droit (31'), sont à angle droit les unes par rapport aux autres,
**caractérisé en ce que** :
dans une même microstructure à sommet à angle droit (31'), les trois arêtes présentent chacune une longueur allant de 20 µm à 5 mm, les trois arêtes sont de longueurs inégales, et une longueur d'une arête la plus longue ne dépasse pas 10 fois une longueur d'une arête la plus courte,
la microstructure à sommet à angle droit (31') est une micro-pyramide triangulaire, dont les trois arêtes sont à angle droit les unes par rapport aux autres, le sommet à angle droit de la microstructure à sommet à angle droit (31') étant incorporé dans un substrat (30) ; une face inférieure de la microstructure à sommet à angle droit (31') opposée au sommet à angle droit est affleurante avec le substrat (30), et un film antireflet est en outre formé sur la face inférieure.

15. Système d'imagerie dans l'air comprenant :
une source d'image (1),
un transflecteur (2),
un premier élément rétroréfléchissant et
un second élément rétroréfléchissant,
dans lequel des rayons lumineux émis par la source d'image (1) sont réfléchis par le transflecteur (2) pour irradier le premier élément rétroréfléchissant, et les rayons lumineux sont soumis à une réflexion sur le premier élément rétroréfléchissant pour se propager le long d'un trajet incident original dans une direction opposée, puis pour être transmis à travers le transflecteur (2) afin de former une première image réelle ; et
en outre, les rayons lumineux émis par la source d'image (1) sont transmis à travers le transflecteur (2) pour irradier le second élément rétroréfléchissant, et les rayons lumineux sont soumis à une réflexion sur le second élément rétroréfléchissant pour se propager le long d'un trajet incident original dans une direction opposée, puis pour être réfléchis par le transflecteur (2) afin de former une seconde image réelle;
chacun du premier élément rétroréfléchissant et du second élément rétroréfléchissant comprend une pluralité d'unités rétroréfléchissantes ;
les unités rétroréfléchissantes comprennent chacune une microstructure (31, 31') ;
la microstructure (31, 31') comprend une microstructure à sommet à angle droit (31) constituée d'un matériau transparent ;
La microstructure à sommet à angle droit (31') comprend au moins un sommet à angle droit, et trois arêtes, qui se croisent au niveau de l'au moins un sommet à angle droit de la microstructure à sommet à angle droit (31'), sont à angle droit les unes par rapport aux autres, **caractérisée en ce que** :
dans une même microstructure à sommet à angle droit (31'), les trois arêtes présentent chacune une longueur allant de 20 µm à 5 mm, les trois arêtes sont de longueurs inégales, et une longueur d'une arête la plus longue ne dépasse pas 10 fois une longueur d'une arête la plus courte,
la microstructure à sommet à angle droit (31') est une micro-pyramide triangulaire, dont les trois arêtes sont à angle droit les unes par rapport aux autres, le sommet à angle droit de la microstructure à sommet à angle droit (31') étant incorporé dans un substrat (30) ; une face inférieure de la microstructure à sommet à angle droit (31') opposée au sommet à angle droit est affleurante avec le substrat (30), et un film antireflet est en outre formé sur la face inférieure.
